# EUROPÄISCHE PATENTSCHRIFT

(11) **EP 0 857 268 B1**
(45) Veröffentlichungstag und Bekanntmachung des Hinweises auf die Patenterteilung: **04.08.1999**
(21) Anmeldenummer: 96934744.2
(22) Anmeldetag: 18.10.1996
(51) Int. Cl.: F16H 61/30

(54) **SCHALTVORRICHTUNG FÜR KRAFTFAHRZEUG-WECHSELGETRIEBE - PNEUMATISCHER SCHALTSERVO -**
GEAR-SHIFT DEVICE FOR MOTOR-VEHICLE GEARBOXES (PNEUMATIC GEAR-SHIFT SERVO DEVICE)
DISPOSITIF DE CHANGEMENT DE VITESSE POUR LES BOITES DE VITESSES DE VEHICULES - SERVOCOMMANDE PNEUMATIQUE -

(30) Priorität: 24.10.1995 DE 19539472
(43) Veröffentlichungstag der Anmeldung: 12.08.1998
(73) Patentinhaber: ZF FRIEDRICHSHAFEN Aktiengesellschaft, 88038 Friedrichshafen (DE)
(72) Erfinder: FISCHER, Dieter, D-88149 Nonnenhorn (DE); GLASER, Wilfried, D-88046 Friedrichshafen (DE); KLEINER, Daniel, D-78259 Mühlhausen-Ehingen (DE); SPÄTH, Klaus, D-88276 Berg (DE); LAUMANN, Jürgen, D-88090 Immenstaad (DE); NUDING, Christoph, D-88045 Friedichshafen (DE); TSCHIRDEWAHN, Rafael, D-88048 Friedrichshafen (DE)
(86) Internationale Anmeldenummer: EP9604533
(87) Internationale Veröffentlichungsnummer: WO9715768

(56) Entgegenhaltungen:
- GB-A- 2 110 325
- US-A- 2 969 044
- US-A- 3 044 451

## Beschreibung

Die Erfindung betrifft eine Schaltvorrichtung für Kraftfahrzeug-Wechselgetriebe nach dem Oberbegriff des Anspruchs 1.

Bei derartigen Schaltvorrichtungen dient die Drehbewegung der Schaltstange zur Vorwahl der einzelnen Schaltgassen und erfordert im allgemeinen keine hohen Schaltkräfte. Die axiale Längsbewegung der Schaltstange dient zum Einlegen des gewünschten Ganges und erfordert insbesondere bei Getrieben für schwere Fahrzeuge und solchen Fahrzeugen, deren Fahrersitz vom Getriebe entfernt angeordnet ist, größere Schaltkräfte.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muß er in allen Tätigkeiten, die zum Führen eines Kraftfahrzeuges notwendig sind, soweit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil.
Die Anordnung weist jedoch den Nachteil auf, daß die Kräfte im Druckluftzylinder auf beiden Seiten des Kolbens gleich groß sind. Eine an die zu schaltenden Gangstufen angepaßte verstärkte Schaltkraft ist damit nicht erreichbar.

Der Erfindung liegt die Aufgabe zugrunde, die Schaltvorrichtung so weiterzubilden, daß die pneumatisch verstärkten Schaltkräfte für die eine zu schaltende Gangstufe größer sind als für die andere Gangstufe.

Erfindungsgemäß wird die Aufgabe gelöst durch eine Schaltvorrichtung mit den Merkmalen des Anspruchs 1. Ausgestaltungen sind Gegenstand von Unteransprüchen.

Der für die Schaltung in eine erste Richtung zuständige eine Betätigungskolben und die entsprechend zugeordnete Seite des Kolbens wird in der erfindungsgemäßen Schaltvorrichtung anders ausgestaltet, als der für die Schaltung in die zweite, entgegengesetzte Richtung zuständige Betätigungskolben und die gegenüberliegende Seite des Kolbens. Als den Fahrer unterstützendes Druckmittel wird vorzugsweise Luft verwendet.

Dabei können vorzugsweise die vom Druckmittel beaufschlagten Flächen des Kolbens auf der einen Seite, die die größere Schaltkraft erzeugen soll, größer ausgestaltet sein als die beaufschlagten Flächen auf der Seite des Kolbens, die die geringere Schaltkraft erzeugen soll. Die Größe der zugelassenen Kraft kann dabei abhängig von der zulässigen Beanspruchung der jeweils verbundenen Schaltungsbestandteile gemacht werden.

Eine weitere Möglichkeit besteht darin, durch die Ventilkennlinie des Betätigungskolbens die Kraft auf der jeweiligen Kolbenseite zu beeinflussen.

Weiterhin ist eine Kombination aus beiden Möglichkeiten, Fläche des Kolbens und Ventilkennlinie des Betätigungskolbens, möglich.

Bisherige Schaltvorrichtungen, die die Schaltkraft des Fahrers unterstützten, wiesen ein Entweder-Oder-Verhalten auf, ein sogenanntes Schwarz-Weiß-Verhalten. Dabei wurde die volle Unterstützung der Servokraft auf die Synchronisierungen auf beiden Seiten der Schaltvorrichtung gleichwertig abgegeben. Deshalb mußten bisher alle Synchronisierungen auf die größtmögliche Belastung ausgelegt werden, d. h. die Synchronisierungen waren im allgemeinen überdimensioniert, oder die Synchronisierungen hatten ständige Überlastungen zu ertragen. Der Fahrer konnte auf dem Schalthebel über eine längere Zeitdauer ständig einwirken und damit eine Synchronisierung überlasten. Die erfindungsgemäße Schaltvorrichtung weist ein Verhalten der unterstützenden Schaltkraft auf, das im Verhältnis der in die Schaltvorrichtung eingeleiteten Handkraft des Fahrers entspricht. Dadurch wird dem Fahrer eine derartige leichte Unterstützung gewährt, wie er sie bei seinem Schaltvorgang am Schalthebel anfordert. Schaltet der Fahrer entsprechend schnell oder reißt er am Schalthebel, so wird auch die Schaltzeit im Getriebe entsprechend kurz ausfallen. Gangwechsel erfordern zwischen verschiedenen Gangstufen verschieden hohe Schaltkräfte, die zu einem schnellen und sicheren Einlegen der gewünschten Gangstufe führen.

Bei einer Schaltvorrichtung nach der Erfindung wird das Steuerventil und der Kraftteil in einem Bauteil kombiniert. Die Schaltkraft des Fahrers wird, je nach Schaltkraft bzw. je nach geometrischer Anordnung von Ventilkennlinie oder Kolbenfläche, verstärkt und wirkt entsprechend einem handgeschalteten Getriebe. Der Fahrer verliert nicht das Gespür für die Schaltung, sein Empfinden, ob ein Gang eingelegt ist oder wie lang die Synchronisationphase andauert, kann er unmittelbar spüren.

Nach der Erfindung soll die Schaltbewegung einer Getriebeschaltvorrichtung durch Druckluft als Hilfskraft unterstützt werden, während die Wählbewegung mit der Hand ohne Unterstützung ausgeführt wird.

Dadurch, daß nur ein Teil des Gangwechsels durch eine Servokraft unterstützt wird, vereinfacht sich der Aufbau der Schalteinrichtung gegenüber Voll-Servoschalteinrichtungen. Kosten und Anbauaufwand werden erheblich reduziert, auch eine Nachrüstung ab bereits eingebauten Getrieben ist problemlos möglich.

Der Fahrer kann weiterhin von Hand schalten, wenn der Luftdruck durch einen Schaden in der Druckluft-Anlage zu klein sein sollte oder gar ganz ausfallen sollte. Dazu sind keine irgendwie gearteten Umschaltmaßnahmen erforderlich. Die Bremsfähigkeit des Kraftfahrzeuges, sofern sie durch das Getriebe geboten wird, bleibt gesichert.

Die Druckluftunterstützung steuert einen großen Teil der beim Schalten aufzuwendenden Kraft bei - jedoch nur soviel, daß dem Fahrer das Schaltgefühl erhalten bleibt. Die manuell vom Fahrer aufzubringende Handkraft wird durch eine pneumatische Schalthilfe auf einen Bruchteil der insgesamt erforderlichen Kraft reduziert. Synchronisierte Nutzfahrzeug-Getriebe werden auch bei schweren Fahrzeugen zu Leichtschaltgetrieben. Bei Fahrten auf Gefällstrecken wird das Zurückschalten der Getriebe, insbesondere in den unteren Gängen, außerordentlich erleichtert und dadurch wird ein erheblicher Beitrag zur Steigerung der Unfallsicherheit beigesteuert.

Die erfindungsgemäße Schaltvorrichtung findet ihren Einsatzbereich bei allen Synchrongetrieben mit H-Schaltung, Doppel-H-Schaltung und überlagerter-H-Schaltung. Sie findet auch für den Anbau am Getriebe im vom Fahrzeughersteller stark eingeschränkten Bauraum ausreichend Platz. Bei einem erforderlichen Tausch oder einer Nachrüstung sind die Ausfallzeiten für den Fahrzeugbetreiber erfreulich kurz, da die gesamte Schaltvorrichtung zusammen ausgetauscht bzw. montiert werden kann, ohne daß spezielle Einstellungen vor Ort am Fahrzeug vorgenommen werden müssen. Der Schaltweg des Getriebes läßt sich durch die Anordnung der erfindungsgemäßen Schaltvorrichtung auch verkürzt darstellen. Durch entsprechende Auslegung der Hebelverhältnisse im Schaltgestänge läßt sich für ein Standardgetriebe der Schaltweg reduzieren. Der verkürzte Schaltweg wirkt sich am Schalthebel für den Fahrer positiv aus.

Ebenfalls hat der Fahrer während des Schaltvorganges eine ständig spürbare Rückkopplung zum Schaltablauf im Getriebe. Über die vorhandene mechanische Verbindung zwischen dem Schalthebel und der Synchronisierung im Getriebe spürt der Fahrer wie bei einer mechanischen und nicht unterstützten Schaltvorrichtung die Reaktionen des Getriebes. Somit bleibt ihm die Eingriffsmöglichkeit in den Schaltablauf jederzeit erhalten und er kann jederzeit den ablaufenden Schaltprozeß abbrechen. Dem Fahrer bleibt bei einem Ausfall der Druckluftunterstützung uneingeschränkt die Schaltbarkeit des Getriebes erhalten, so daß er in Notfällen das Fahrzeug, wohl mit erhöhtem Kraftaufwand, doch aber sicher, durch Änderungen der Übersetzung abbremsen kann.

Durch eine entsprechende Auslegung der Schaltvorrichtung können die von ihr erzeugten Hilfskräfte zur Unterstützung der Schaltung an die Schaltanlage zwischen Fahrer und Getriebe angepaßt werden.
Die bei pneumatischen Schaltvorrichtungen häufig zu verspürenden Nachschlageeffekte beim Übergang von Entsperrvorgang zur Freiflugphase entfallen bzw. werden von der Schaltvorrichtung kompensiert. Im Gegensatz zu bisherigen Schaltvorrichtungen wird durch eine schnelle Entlüftung dafür gesorgt, daß bei einem abgebrochenen Schaltablauf kein Druck in der Schaltvorrichtung mehr ansteht, der das gesamte Schaltsystem bis zum Schalthebel hin noch unerwünscht beschleunigen und diesen Nachschlageeffekt hervorrufen könnte. Die Schaltvorrichtung ist bei abgebrochenem Schaltablauf vollständig drucklos.

Durch die Proportionalität zwischen Handschaltkraft und von der Schaltvorrichtung verstärkt abgegebener Kraft erfährt die Handschaltkraft bei Bedarf auch nur eine leichte Unterstützung. Das Gesamtsystem wird nicht wie bei unproportional verstärkten Vorrichtungen unnötig beschleunigt. Der integrierte Aufbau der Schaltvorrichtung schafft kleine Volumina, kurze, direkte Wege und damit kleine Füllzeiten. Ebenso wird aufgrund kleiner Massen eine schnelle Reaktion der Bauteile erzielt.

Die Erfindung wird anhand von Figuren näher erläutert. Es zeigen:
- Fig. 1: eine Schaltanlage;
- Fig. 2: einen Schnitt der Schaltvorrichtung und
- Fig. 3: einen Schnitt nach Fig. 2 in vergrößerter Darstellung.

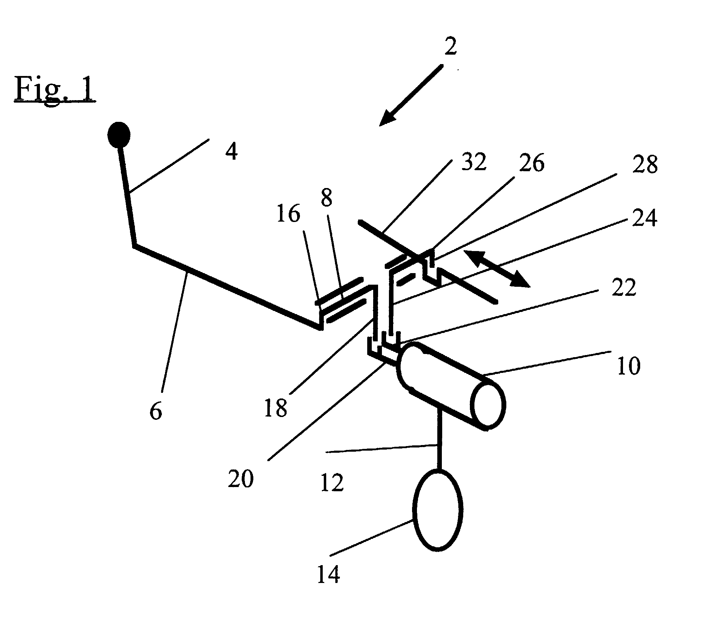

Die Fig. 1 zeigt in einer Skizze die Schaltanlage 2 eines Kraftfahrzeuges. Von einem Schalthebel 4 aus führt eine Schaltstange 6 über eine Hebelumlenkung 8 zu einer Schaltvorrichtung 10. Die Schaltvorrichtung 10 weist eine Anschlußleitung 12 auf, die zu einem Vorratsbehälter 14 führt, aus dem die Schaltvorrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der Schaltvorrichtung 10 angeordnet ist. Weiterhin ist in der Schaltvorrichtung 10 eine Kolbenstange 22 vorgesehen, in die ein Hebel 24 eingreift, welcher über eine Drehwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Drehwelle 26 in eine Bewegung des Hebels 28 übertragen, so daß der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

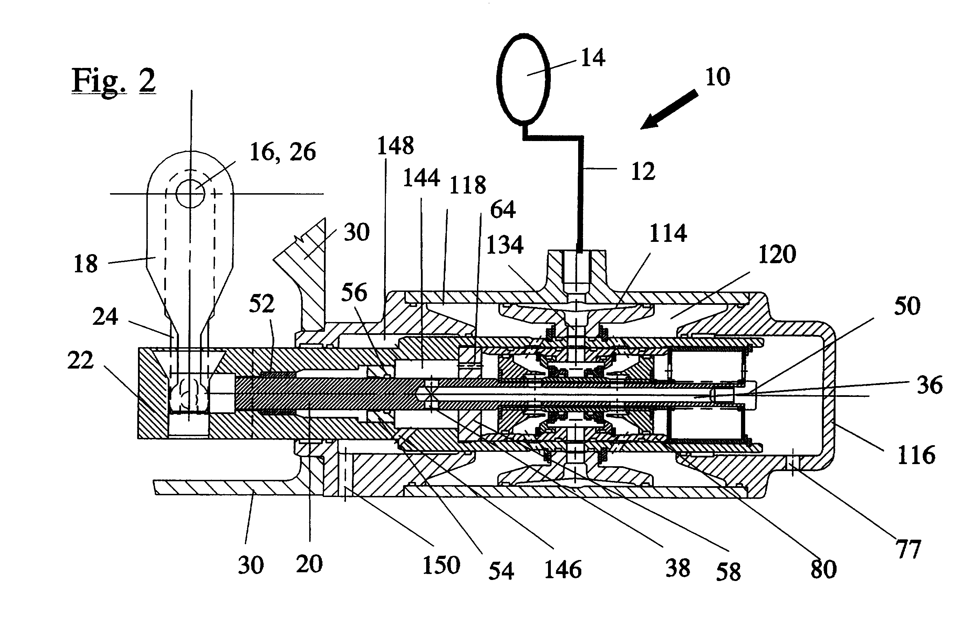

Die Fig. 2 zeigt eine Schnittdarstellung der erfindungsgemäßen Schaltvorrichtung 10.

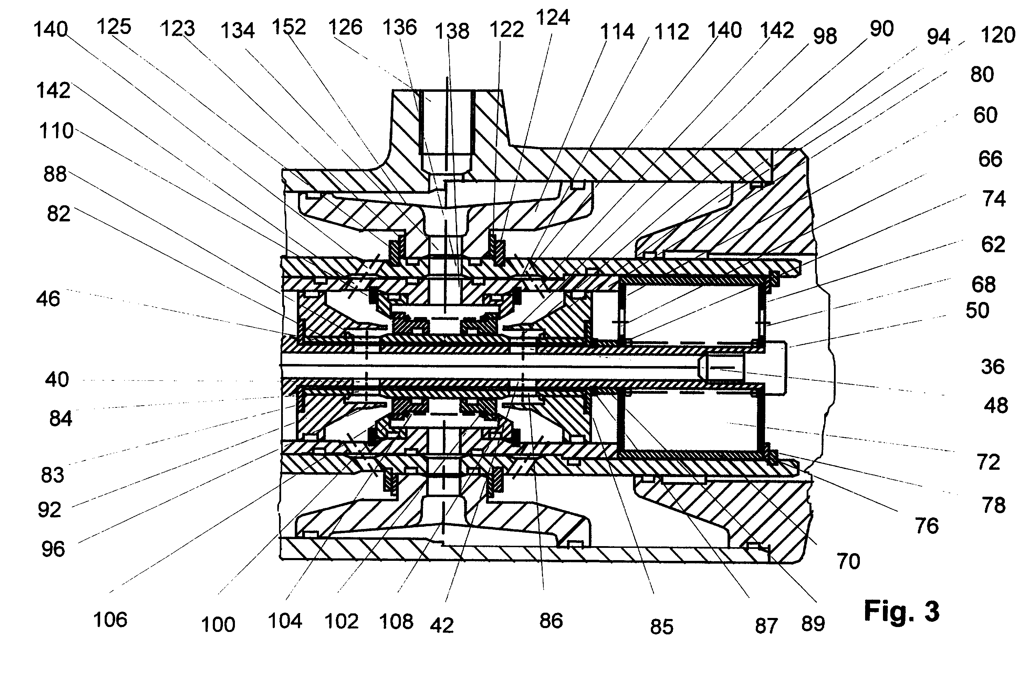

Die Fig. 3 zeigt einen vergrößerten Ausschnitt der Darstellung nach Fig. 2. Die Schaltvorrichtung 10 kann, wie hier gezeigt, in einem Teil des Getriebes 30 eingefügt sein, oder sie ist separat außen am Gehäuse angeordnet. Der Hebel 18 ist über die Drehwelle 16 mit dem hier nicht gezeigten Schaltgestänge verbunden. Über dieses Schaltgestänge wird der Hebel 18 vom Fahrer bewegt. In der axialen Fortsetzung der Welle 16 ist die Drehwelle 26 vorgesehen, über die der Hebel 24 mit weiteren hier nicht gezeigten Bauteilen des Getriebes zusammenwirkt. Der Hebel 18 greift in die Steuerstange 20 ein, die sich innerhalb einer Kolbenstange 22 befindet. Die Steuerstange 20 weist eine axiale Bohrung 36 auf, von der aus radiale Öffnungen 38, 40, 42, 46, 48 ausgehen. Die Steuerstange 20 weist einen vorzugsweise kreisförmigen Querschnitt auf. Die Öffnungen können, an der jeweiligen axialen Position, auch anders als hier um jeweils 180° versetzt gezeigt, auf dem Umfang der Steuerstange 20 verteilt sein. Es sind an der jeweiligen axialen Position auch mehr als zwei Öffnungen möglich. Die axiale Öffnung 36 endet an ihrem einen Ende in der Steuerstange 20 und ist an ihrem gegenüberliegenden Ende durch eine Verschraubung 50 verschlossen. Innerhalb der Kolbenstange 22 ist eine Gleitlagerung 52 für die Steuerstange 20 vorgesehen. Des weiteren wird die Steuerstange 20 innerhalb der Kolbenstange 22 von einer Trennscheibe 58 abgestützt. Eine Scheibe 54 weist einen Dichtring 56 auf, der die Steuerstange 20 umschließt. Zwei Scheiben 60 und 62 sind ebenfalls auf der Steuerstange 20 angeordnet. Die Trennscheibe 58 weist wenigstens eine Öffnung 64 auf, die Scheiben 60 und 62 weisen je wenigstens eine Öffnung 66 bzw. 68 auf. Zwischen den beiden Scheiben 60 und 62, der Steuerstange 20 und einem Ring 70 ist ein Ringraum 72 gebildet. Die beiden Scheiben 60 und 62 sind an der Innenwand des Ringes 70 verschiebbar angeordnet. Dabei werden die beiden Scheiben 60 und 62 axial von einer zwischen ihnen angeordneten Feder 74 auseinandergehalten. Die Anordnung der Scheiben 60, 62 und der Feder 74 dient der Abstützung und Fixierung des Handschalthebels. Durch die Öffnungen 66 und 68 wird sichergestellt, daß sich in dem Ringraum 72 zwischen den Scheiben 60 und 62 kein unerwünschter Druck bildet. Die axiale Bewegbarkeit der Scheibe 62 wird einerseits durch die Feder 74 und andererseits durch eine Scheibe 76 begrenzt. An die Scheibe 76 schließt axial einerseits der Ring 70 an und auf der anderen Seite ein Sicherungsring 78, der innerhalb der Kolbenstange 22 angeordnet ist. Der Ring 70 wird axial auf seiner anderen Seite von einem Steuerventilring 80 begrenzt, der wiederum an der Trennscheibe 58 anliegt. Der Steuerventilring 80 ist radial innerhalb der Kolbenstange 22 angeordnet. Ein zwischen Scheibe 62, Verschraubung 50 und Gehäuse 116 gebildeter Raum wird durch eine Öffnung 77 an die Umgebung entlüftet.

Im Bereich des Steuerventilrings 80 ist die Steuerstange 20 von einem Ring 82 umgeben, der Öffnungen 84, 86, 88 und 90 aufweist. Die Öffnungen 84, 86, 88, 90 korrespondieren jeweils mit den Öffnungen 40, 42, 46 bzw. 48 in der innenliegenden Steuerstange 20. Zwischen Ring 82 und Steuerventilring 80 sind zwei axial verschiebbare Betätigungskolben 92 und 94 vorgesehen. Der Ring 82 wird an seinen axialen Enden von Scheiben 83 und 85 begrenzt. Scheibe 83 liegt an einer Kante der Steuerstange 20 an und Scheibe 85 wird von einem Sicherungsring 87 auf der Steuerstange 20 gehalten. Der Sicherungsring 87 hält ebenfalls die Scheibe 60 über einen zwischen Scheibe 60 und Sicherungsring 87 angeordneten Ring 89.
Die Betätigungskolben 92 und 94 weisen Nasen 96 bzw. 98 auf. Axial verschiebbar sind ebenfalls zwei Ventilteller 100 und 102 auf dem Ring 82 angeordnet, die in axialer Richtung von einer Feder 104 auseinandergehalten werden. Dabei liegen die Ventilteller 100 und 102 dicht an Steuerkanten 106 bzw. 108 an, die radial innerhalb des Steuerventilrings 80 liegen und axial einerseits von diesem Steuerventilring 80 und andererseits von Sicherungsringen 110 bzw. 112 begrenzt sind. Je nach Betätigung der Steuerstange 20 durch den Fahrer erzeugt die zwischen Steuerkante 106, 108 und Ventilteller 100, 102 einströmende Druckluft auf die Betätigungskolben 92, 94 eine entsprechend proportionale Gegenkraft zur Handschaltkraft. Dementsprechend füllt sich der jeweilige Druckraum 118, 120 und dementsprechend verschiebt sich auch die Kolbenstange 22 und damit die Schaltschiene 32.
Reaktionen aus dem Getriebe auf die Schaltschiene 32 werden in entsprechender Weise zurückübertragen, d. h., je nachdem, wie stark aus dem Druckraum 118, 120 auf die Kontur der Betätigungskolben zurückgedrückt wird, überträgt sich dieser Druck über die Steuerstange 20 auch auf den Schalthebel 4 und damit auf die Fahrerhand. Der Schaltablauf mit den charakteristischen Schaltpunkten, beispielsweise Synchronphase, Durchschaltphase, Feststellen, daß Gang eingelegt, bleibt für den Fahrer spürbar. Er bekommt somit auch eine Informationsrückführung durch hohe Synchronkräfte bei Fehlschaltungsversuchen. Die Schaltabläufe sind jederzeit korrigierbar bzw. abbrechbar.

Die Ventilkennlinie der beiden Seiten des Ventils sind unterschiedlich. Dadurch können die Verstärkungen für beide Seiten der Schalteinrichtung unterschiedlich ausgelegt werden. Eine unterschiedliche Ventilkennlinie kann beispielsweise durch unterschiedlich große Kolbenflächen an den Betätigungskolben 92 und 94 vorgesehen werden. Hiermit sind die Kolbenflächen der Betätigungskolben 92 und 94 gemeint, die den Steuerkanten 106 bzw. 108 zugewandt sind.

Radial außerhalb der Kolbenstange 22 teilt ein Kolben 114 den Ringraum zwischen dem Gehäuse 116 der Schaltvorrichtung 10 und der Kolbenstange 22 in zwei Druckräume 118 und 120. Die Kolbenoberfläche des Kolbens 114, die zum Druckraum 120 weist, ist in der hier gezeigten Ausgestaltung größer ausgebildet als die Kolbenfläche, die zum Druckraum 118 weist. Durch diese Maßnahme kann die Verstärkung der Handschaltkraft für beide Seiten der Schalteinrichtung unterschiedlich ausgelegt werden.

Die unterschiedliche Auslegung der Ventilkennlinien der Betätigungskolben 92 und 94 kann mit der unterschiedlich großen Ausgestaltung der Kolbenfläche des Kolbens 114 kombiniert werden.

Der Kolben 114 ist hier beispielsweise durch Scheiben 122, 123 und Sicherungsringe 124, 125 mit der Kolbenstange 22 verbunden. Andere bekannte Maßnahmen der Befestigung sind gleichermaßen möglich. Das Gehäuse 116 weist eine Öffnung 126 auf, die mit der Anschlußleitung 12 für die Zuführung von Druckluft aus dem Vorratsbehälter 14 verbunden ist. Der Kolben 114 weist radial verlaufende Öffnungen 134 auf, die in Mittelstellung der Schaltvorrichtung 10 mit der Öffnung 126 im Gehäuse 116 sowie mit Öffnungen 136 in der Kolbenstange 22 und Öffnungen 138 im Steuerventilring 80 korrespondieren. Die Kolbenstange 22 weist weitere Öffnungen 140 auf, die mit Öffnungen 142 im Steuerventilring 80 korrespondieren.
Ein zwischen Steuerstange 20, Kolbenstange 22, Scheibe 54 und Trennscheibe 58 gebildeter Ringraum 144 weist eine Öffnung 146 auf, die zu einem weiteren Ringraum 148 führt. Der Ringraum 148 wird zwischen Gehäuse 116 und Kolbenstange 22 gebildet und ist über eine Öffnung 150 mit der Außenumgebung verbunden.

Die Anzahl der Öffnungen 134, 136, 138, 140, 142 und 146 ist nicht auf die hier gezeigte Anzahl von jeweils zwei Öffnungen beschränkt, sondern es können jeweils mehrere Öffnungen am Umfang des jeweiligen die Öffnungen aufweisenden Bauteils verteilt angeordnet sein.

Aus der Mittelstellung der Schaltvorrichtung 10 wird bei Betätigung des Schalthebels 4 durch den Fahrer über die Schaltstange 6 und die Hebel 16 und 18 die Steuerstange 20 axial verschoben, beispielsweise in der Zeichnungsebene nach rechts. In der Mittelstellung der Schaltvorrichtung 10 ist der Druckraum 120 über die Öffnungen 140, 142, 90, 48, 38, 146 und 150 mit der Außenumgebung verbunden und damit entlüftet. Wird nun die Steuerstange 20 nach rechts verschoben, so stößt der Betätigungskolben 92 mit der Nase 96 an den Ventilteller 100 an und verschiebt diesen von der Steuerkante 106 weg ebenfalls nach rechts. Dadurch kann Druckluft aus dem Vorratsbehälter 14 über die Anschlußleitung 12 und durch die Öffnungen 126, 134, 136 und 138 an der Nase 96 des Betätigungskolbens 92 vorbei und weiter durch die Öffnungen 142 und 140 in den Druckraum 118 gelangen. Dort verschiebt die Druckluft den Kolben 114 nach rechts. Der Kolben 114 verschiebt dabei mit Hilfe der Scheibe 122 und des Sicherungsringes 124 die Kolbenstange 22 ebenfalls nach rechts. Die Kolbenstange 22 betätigt ihrerseits den Hebel 24 und damit über die Drehwelle 26 den Hebel 28. Der Hebel 28 verschiebt in dem Fahrzeuggetriebe die Schaltschiene 32 derart, daß aus der Neutralstellung in einen Gang geschaltet wird. Durch entsprechend groß gestaltete Öffnungen in der gesamten Schaltvorrichtung 10, die keinerlei Drosselfunktionen erfüllen sollen, erfolgt der Druckaufbau sehr schnell und verzögerungsfrei.

Durch die Bewegung der Kolbenstange 22 nach rechts löst sich die Nase 96 des Betätigungskolbens 92 wieder vom Ventilteller 100 und dieser wird im wesentlichen durch die nachströmende Druckluft unter Unterstützung durch die Feder 104 an die Steuerkante 106 zurückgedrückt. Der Druckraum 118 wird über die Öffnungen 140, 142 an der Nase 96 des Betätigungskolbens 92 vorbei durch die Öffnungen 88, 46 in die Bohrung 36 der Steuerstange 22 hinein und von dort durch Öffnungen 38, 146 und 150 an die Außenumgebung entlüftet. Durch entsprechend groß gestaltete Querschnitte der Öffnungen erfolgt auch diese Entlüftung sehr schnell.

Soll nun der in der Schaltgasse gegenüberliegende Gang geschaltet werden, so wird aus der rechten Stellung der Schaltvorrichtung 10 bei Betätigung des Schalthebels 4 durch den Fahrer über die Schaltstange 6 und die Hebel 16 und 18 die Steuerstange 20 axial nach links in der Zeichnungsebene verschoben. Der Betätigungskolben 94 stößt mit der Nase 98 an den Ventilteller 102 an und verschiebt diesen von der Steuerkante 108 weg ebenfalls nach links. Dadurch kann Druckluft aus dem Vorratsbehälter 14 über die Anschlußleitung 12 und durch die Öffnungen 126, 134, 136 und 138 an der Nase 98 des Betätigungskolbens 94 vorbei und weiter durch die Öffnungen 142 und 140 in den Druckraum 120 gelangen. Dort verschiebt die Druckluft den Kolben 114 nach links. Der Kolben 114 verschiebt dabei mit Hilfe der Scheibe 123 und des Sicherungsringes 125 die Kolbenstange 22 ebenfalls nach links. Die Kolbenstange 22 betätigt ihrerseits den Hebel 24 und damit über die Drehwelle 26 den Hebel 28. Der Hebel 28 verschiebt in dem Fahrzeuggetriebe die Schaltschiene 32 derart, daß aus dem einen Gang in den in der Schaltgasse gegenüberliegenden Gang geschaltet wird. Durch die Bewegung der Kolbenstange 22 nach links löst sich die Nase 98 des Betätigungskolbens 94 wieder vom Ventilteller 102 und dieser wird an die Steuerkante 108 zurückgedrückt. Der Druckraum 120 wird über die Öffnungen 140, 142 an der Nase 98 des Betätigungskolbens 94 vorbei durch die Öffnungen 90, 48 in die Bohrung 36 der Steuerstange 22 hinein und von dort durch Öffnungen 38, 146 und 150 an die Außenumgebung entlüftet. Durch entsprechend groß gestaltete Querschnitte der Öffnungen erfolgt auch diese Entlüftung sehr schnell.

Die gesamte Schaltvorrichtung ist durchflußoptimiert. Eine Drosselung von Luftströmungen an den vorhandenen Öffnungen findet nicht statt. Das führt zu einer schnellen Belüftung und schnellen Entlüftung der Druckräume.

Bei Ausfall der Druckluft läßt sich das Getriebe wie ein nicht unterstütztes Getriebe schalten. Die Handschaltkraft des Fahrers wird über Schalthebel 4, Schaltstange 6, Hebel 16 und 18 auf die Steuerstange 20 übertragen. Die Steuerstange 20 bewegt beispielsweise bei einer Bewegung nach rechts in der Zeichenebene den Betätigungskolben 92 nach rechts. Die Nase 96 stößt an den Ventilteller 100 an. Je nach Auslegung der Federn 104 und 74 wird die Kolbenstange 22 ebenfalls nach rechts bewegt, entweder über den Ventilteller 102, Steuerkante 108, Sicherungsring 112, Steuerventilring 80, Ring 70, Scheibe 76 und Sicherungsring 78 oder durch Sicherungsring 87, Ring 89, Scheibe 60, Feder 74, Scheiben 62 und 76 und Sicherungsring 78. Die Schaltbarkeit ist dadurch mechanisch ununterbrochen sichergestellt.
Übersteigt die erforderliche Handschaltkraft die Federkräfte der Federn 104 und 74, so kann durch eine hier nicht gezeigte Vorrichtung zwischen Hebelumlenkung 8 und Drehwelle 26 ein Formschluß erzielt werden.

Im wesentlichen können alle Bauteile als einfach und kostengünstig herzustellende Drehteile vorgesehen werden. Gespritzte Kunststoffteile können aus Kostengründen, zur verbesserten Dichtheit und zur Vermeidung von Korrosion für verschiedene Bauteile ebenfalls verwendet werden. Das ermöglicht, daß sich die erfindungsgemäße Schaltvorrichtung als ein kompakt aufgebautes und kostengünstiges Ausrüstteil und Nachrüstteil anbietet.

Die hier vorzugsweise beschriebene Druckluftbetätigung der Schaltvorrichtung stellt keine Beschränkung auf diese Art der Hilfsenergie dar. Es kann ebenfalls in einer nicht bevorzugten Ausführungsform eine hydraulisch unterstützte Ausgestaltung der erfinderischen Idee vorgesehen werden.

### Bezugszeichen

- 2: Schaltanlage
- 4: Schalthebel
- 6: Schaltstange
- 8: Hebelumlenkung
- 10: Schaltvorrichtung
- 12: Anschlußleitung
- 14: Vorratsbehälter
- 16, 18: Hebel
- 20: Steuerstange
- 22: Kolbenstange
- 24: Hebel
- 26: Drehwelle
- 28: Hebel
- 30: Fahrzeuggetriebe
- 32: Schaltschiene
- 36 - 48: Öffnung
- 50: Verschraubung
- 52: Gleitlagerung
- 54: Scheibe
- 56: Dichtring
- 58: Trennscheibe
- 60, 62: Scheibe
- 64 - 68: Öffnungen
- 70: Ring
- 72: Ringraum
- 74: Feder
- 76: Scheibe
- 77: Öffnung
- 78: Sicherungsring
- 80: Steuerventilring
- 82: Ring
- 83, 85: Scheibe
- 84 - 90: Öffnungen
- 87: Sicherungsring
- 89: Ring
- 92, 94: Betätigungskolben
- 96, 98: Nasen
- 100, 102: Ventilteller
- 104: Feder
- 106, 108: Steuerkante
- 110, 112: Sicherungsring
- 114: Kolben
- 116: Gehäuse
- 118, 120: Druckraum
- 122, 123: Scheibe
- 124, 125: Sicherungsring
- 126 - 142: Öffnungen
- 144: Ringraum
- 146: Öffnung
- 148: Ringraum
- 150: Öffnung

## Patentansprüche

1. Schaltvorrichtung (10), insbesondere für Zahnräderwechselgetriebe von Kraftfahrzeugen mit einer Vielzahl von Gangstufen, zur Unterstützung der Handschaltkraft eines Fahrers durch eine Hilfsenergie mit von der Handschaltkraft bewegten Betätigungskolben (92, 94) und von der Hilfsenergie bewegten Kolben (114), durch **gekennzeichnet**, daß die Schaltvorrichtung (10) Mittel (92, 94, 114) aufweist, die eine unterschiedliche große Verstärkung der Handschaltkraft für unterschiedliche Gangstufen ermöglicht.

2. Schaltvorrichtung (10) nach Anspruch 1, dadurch **gekennzeichnet**, daß die Mittel zur unterschiedlichen Verstärkung der Handschaltkraft Betätigungskolben (92, 94) mit unterschiedlich großen Kolbenflächen sind, die unterschiedliche Ventilkennlinien bewirken und mit Handschaltkraft betätigt werden.

3. Schaltvorrichtung (10) nach Anspruch 1, dadurch **gekennzeichnet**, daß die Mittel zur unterschiedlichen Verstärkung der Handschaltkraft unterschiedlich große und entgegengesetzt angeordnete Kolbenflächen eines von der Hilfsenergie betätigten Kolbens (114) sind.

4. Schaltvorrichtung (10) nach Anspruch 1, dadurch **gekennzeichnet**, daß die Mittel zur unterschiedlichen Verstärkung der Handschaltkraft eine Kombination aus unterschiedlichen Ventilkennlinien der Betätigungskolben (92, 94) und unterschiedlich großen und entgegengesetzt angeordneten Oberflächen eines von der Hilfsenergie betätigten Kolbens (114) sind.

5. Schaltvorrichtung (10) nach einem der Ansprüche 1 bis 4, dadurch **gekennzeichnet**, daß das Fahrzeuggetriebe bei Ausfall der Hilfsenergie manuell schaltbar ist.

6. Schaltvorrichtung (10) nach wenigstens einem der vorherigen Ansprüche, dadurch **gekennzeichnet**, daß eine Vorrichtung zur Bildung eines Formschlusses zwischen Hebel (16) und Drehwelle (26) vorgesehen ist, wodurch das Fahrzeuggetriebe über Schalthebel (4), Schaltgestänge (6, 8, 16), Drehwelle (26), die Vorrichtung, Hebel (28) und Schaltschienen (32) bei Ausfall der Hilfsenergie manuell schaltbar ist.

## Claims

1. Gear-shift device (10), in particular for motor vehicle gearboxes with a large number of gear steps, to support the driver's manual shift force with an auxiliary force provided by manually operated actuator pistons (92, 94) and a piston (114) operated by the auxiliary force **characterized** in that the gear-shift device (10) is equipped with means (92, 94, 114) allowing various degrees of reinforcement of manual shift force for a variety of gear steps.

2. Gear-shift device (10) according to claim 1 **characterized** in that the means for a diversified reinforcement of manual shift-force are constituted by actuator pistons (92, 94) with varying piston surface areas, which produce differences in the valve characteristic curves and are actuated by manual shift force.

3. Gear-shift device (10) according to claim 1 **characterized** in that the means for a diversified reinforcement of manual shift force are constituted by a piston (114) - actuated by the auxiliary force - and its piston surfaces, which are of different dimensions and arranged opposite each other.

4. Gear-shift device (10) according to claim 1 **characterized** in that the means for a diversified reinforcement of manual shift force are constituted by a combination of differing valve characteristic curves ofthe actuator pistons (92, 94) with the differently dimensioned and opposing surfaces of the piston (114) actuated by the auxiliary force.

5. Gear-shift device (10) according to one ofthe claims 1 to 4 **characterized** in that the vehicle gearbox is manually shiftable if the auxiliary force fails.

6. Gear-shift device (10) according to at least one of the previous claims; **characterized** in that a device is provided to bring about postive engagement between lever (16) and turning shaft (26), by means of which in case of a failure of the auxiliary force the vehicle gearbox is manually shiftable via shift lever (4), shifting linkage (6, 8, 16), turning shaft (26), the device, lever (28) and gear-shift rails (32).

## Revendications

1. Dispositif de commande (10), notamment pour boîtes de vitesses à engrenages pour véhicules automobiles avec une multitude de rapports pour assister la force de commande manuelle d'un conducteur par une énergie auxiliaire avec des pistons d'actionnement (92, 94) actionnés par la force de commande manuelle et des pistons (114) actionnés par l'énergie auxiliaire, caractérisé en ce q u e le dispositif de commande (10) comporte des moyens (92, 94, 114) permettant une amplification de différente importance de la force de commande manuelle pour différents rapports.

2. Dispositif de commande (10) selon la revendication 1, **caractérisé en ce que** les moyens pour l'amplification différente de la force de commande manuelle sont des pistons d'actionnement (92, 94) présentant des surfaces de piston différentes, donnant des caractéristiques de soupape différentes et étant actionnés par la force de commande manuelle.

3. Dispositif de commande (10) selon la revendication 1, **caractérisé en ce que** les moyens pour l'amplification différente de la force de commande manuelle sont des surfaces de piston de différentes grandeurs et agencées de manière à être opposées l'une à l'autre, d'un piston (114) actionné par l'énergie auxiliaire.

4. Dispositif de commande (10) selon la revendication 1, **caractérisé en ce que** les moyens pour l'amplification différente de la force de commande manuelle sont une combinaison de différentes caractéristiques de soupape des pistons d'actionnement (92, 94) et de surfaces de différentes grandeurs et agencées de manière à être opposées l'une à l'autre d'un piston (114) actionné par l'énergie auxiliaire.

5. Dispositif de commande (10) selon l'une des revendications I à 4, **caractérisé en ce que** la boîte de vitesses du véhicule peut être commandée manuellement en cas de défaillance de l'énergie auxiliaire.

6. Dispositif de commande (10) selon l'une au moins des revendications précédentes, **caractérisé en ce** qu'un dispositif pour former une fermeture géométrique entre levier (16) et arbre tournant (26) est prévu permettant de commander manuellement la boite de vitesses du véhicule par l'intermédiaire de leviers de commande (4), de timonerie de changement de vitesse (6, 8, 16), d'arbre tournant (26), du dispositif, levier (28) et tige de commande des fourchettes (32), en cas de défaillance de l'énergie auxiliaire.
